# EUROPEAN PATENT SPECIFICATION

(11) **EP 4 099 472 B1**
(45) Date of publication and mention of the grant of the patent: **21.10.2026**
(21) Application number: 21799869.9
(22) Date of filing: 07.05.2021
(51) Int. Cl.: H01M 10/42, H01M 10/48, H01M 50/204, H01M 50/247, H01M 50/296, H01M 50/583, H02J 7/00

(54) **BATTERY PACK AND ELECTRIC TOOL SYSTEM**
BATTERIEPACK UND ELEKTROWERKZEUGSYSTEM
BLOC-BATTERIE ET SYSTÈME D'OUTIL ÉLECTRIQUE

(30) Priority: 07.05.2020 CN 202010378553
(43) Date of publication of application: 07.12.2022
(73) Proprietor: Nanjing Chervon Industry Co., Ltd., Nanjing, Jiangsu 211106 (CN)
(72) Inventor: GENG, Zheng, Nanjing, Jiangsu 211106 (CN)
(74) Representative: Sun, Yiming
(86) International application number: PCT/CN2021/092034
(87) International publication number: WO 2021/223729

(56) References cited:
- EP-A1- 3 428 995
- EP-B1- 1 100 170
- WO-A1-2018/230337
- CN-A- 102 025 129
- CN-A- 102 208 696
- CN-U- 205 070 405
- CN-U- 206 226 070
- CN-U- 208 890 421
- US-A1- 2014 302 353
- US-A1- 2015 200 553
- US-A1- 2016 211 685

## Description

This application claims priority to Chinese Patent Application No. 202010378553.6 filed May 7, 2020.

### TECHNICAL FIELD

The present application relates to a battery pack and a power tool system.

### BACKGROUND

Based on the use requirement for portability, more and more power tools currently use battery packs as power sources.

US2015/200553 A1 describes a known example of a power tool with a battery pack.

The existing battery packs for powering power tools mostly use cylindrical lithium cells. Multiple cylindrical lithium cells connected in series and in parallel ensure sufficient electrical energy output so that the endurance capacity and operating efficiency of the power tools are improved.

The improvement of the endurance capacity and operating efficiency of the power tools also puts higher requirements on the charge and discharge capabilities and safety of the battery packs.

### SUMMARY

The present application provides a battery pack that can meet the requirements of a high-capacity battery pack for charge protection and discharge protection and has a low cost. A battery pack is provided in an example. The battery pack includes a housing, a cell group, an interface, a charge circuit, a discharge circuit, a first interrupt circuit, a second interrupt circuit, and a control unit. The cell group is disposed in the housing. The interface is disposed on the housing so as to be connected to a charger or a power tool, where the interface includes a second positive terminal, a first positive terminal, and a negative terminal. The second positive terminal is connected to a positive electrode of the cell group. The first positive terminal is connected to the positive electrode of the cell group. The negative terminal is connected to a negative electrode of the cell group. The charge circuit is connected in series between the second positive terminal and the negative terminal, where the second positive terminal, the charge circuit, and the negative terminal form a charging loop for charging the battery pack. The discharge circuit is connected in series between the first positive terminal and the negative terminal, where the first positive terminal, the discharge circuit, and the negative terminal form a discharging loop for powering the power tool. The first interrupt circuit is disposed on the discharging loop, where the first interrupt circuit is broken to turn off the discharging loop when a discharge current of the discharging loop is higher than or equal to a first preset current value. The second interrupt circuit is disposed on the charging loop, where the second interrupt circuit has an on state in which the charging loop is turned on and an off state in which the charging loop is turned off. The control unit is connected to the second interrupt circuit, where the control unit outputs, under a preset condition, a control signal to the second interrupt circuit such that the second interrupt circuit switches from the on state to the off state.

Optionally, the preset condition is that a voltage of the cell group is higher than or equal to a first preset voltage value.

Optionally, the preset condition is that a voltage of a cell is higher than or equal to a second preset voltage value.

Optionally, the battery pack further includes a voltage detection unit for detecting the voltage of the cell group or the voltage of the cell, where an input terminal of the voltage detection unit is connected to the cell group or the cell, and an output terminal of the voltage detection unit is connected to the control unit.

Optionally, the preset condition is that a charge current of the charging loop is higher than or equal to a second preset current value.

Optionally, the battery pack further includes a current detection unit for detecting the charge current of the charging loop, where an input terminal of the current detection unit is connected to the charging loop, and an output terminal of the current detection unit is connected to the control unit.

Optionally, the first interrupt circuit includes a first interrupt element; and the second interrupt circuit includes a second interrupt element different from the first interrupt element.

Optionally, the second interrupt element is a three-terminal controllable fuse.

Optionally, the first interrupt element is a strip fuse.

Optionally, a range of the second preset voltage value is greater than or equal to 4 V.

Optionally, the cell group includes multiple stacked sheet-shaped cells.

Optionally, a capacity of the battery pack is higher than or equal to 5 Ah.

A pouch-type battery pack is provided in an example. The pouch-type battery pack includes a housing, a cell group, an interface, a charge circuit, a discharge circuit, a first interrupt circuit, a second interrupt circuit, and a control unit. The cell group is disposed in the housing. The interface is disposed on the housing so as to be connected to a charger or a power tool, where the interface includes a second positive terminal, a first positive terminal, and a negative terminal. The second positive terminal is connected to a positive electrode of the cell group. The first positive terminal is connected to the positive electrode of the cell group. The negative terminal is connected to a negative electrode of the cell group. The charge circuit is connected in series between the second positive terminal and the negative terminal, where the second positive terminal, the charge circuit, and the negative terminal form a charging loop for charging the battery pack. The discharge circuit is connected in series between the first positive terminal and the negative terminal, where the first positive terminal, the discharge circuit, and the negative terminal form a discharging loop for powering the power tool. The first interrupt circuit is disposed on a discharging loop, where the first interrupt circuit is broken to turn off the discharging loop when a discharge current of the discharging loop is higher than or equal to a first preset current value. The second interrupt circuit is disposed on the charging loop, where the second interrupt circuit has an on state in which the charging loop is turned on and an off state in which the charging loop is turned off. The control unit is connected to the second interrupt circuit, where the control unit outputs, under a preset condition, a control signal to the second interrupt circuit such that the second interrupt circuit switches from the on state to the off state.

Optionally, the preset condition is that a voltage of the cell group is higher than or equal to a first preset voltage value.

The preset condition is that a voltage of a cell is higher than or equal to a second preset voltage value.

Optionally, the pouch-type battery pack further includes a voltage detection unit for detecting the voltage of the cell group or the voltage of the cell, where an input terminal of the voltage detection unit is connected to the cell group, and an output terminal of the voltage detection unit is connected to the control unit.

Optionally, the preset condition is that a charge current of the charging loop is higher than or equal to a second preset current value.

Optionally, the battery pack further includes a current detection unit for detecting the charge current of the charging loop, where an input terminal of the current detection unit is connected to the charging loop, and an output terminal of the current detection unit is connected to the control unit.

Optionally, the first interrupt circuit includes a first interrupt element; and the second interrupt circuit includes a second interrupt element different from the first interrupt element.

Optionally, the second interrupt element is a three-terminal controllable fuse.

Optionally, the first interrupt element is a strip fuse.

Optionally, a range of the second preset voltage value is greater than or equal to 4 V.

Optionally, the cell group includes multiple stacked sheet-shaped cells.

Optionally, a capacity of the battery pack is higher than or equal to 5 Ah.

A power tool system is provided in an example. The power tool system includes a power tool and a battery pack. The battery pack is adaptable to the power tool so as to power the power tool. The battery pack includes a housing, a cell group, an interface, a charge circuit, a discharge circuit, a first interrupt circuit, a second interrupt circuit, and a control unit. The cell group is disposed in the housing. The interface is disposed on the housing so as to be connected to a charger or the power tool, where the interface includes a second positive terminal, a first positive terminal, and a negative terminal. The second positive terminal is connected to a positive electrode of the cell group. The first positive terminal is connected to the positive electrode of the cell group. The negative terminal is connected to a negative electrode of the cell group. The charge circuit is connected in series between the second positive terminal and the negative terminal, where the second positive terminal, the charge circuit, and the negative terminal form a charging loop for charging the battery pack. The discharge circuit is connected in series between the first positive terminal and the negative terminal, where the first positive terminal, the discharge circuit, and the negative terminal form a discharging loop for powering the power tool. The first interrupt circuit is disposed on the discharging loop, where the first interrupt circuit is broken to turn off the discharging loop when a discharge current of the discharging loop is higher than or equal to a first preset current value. The second interrupt circuit is disposed on the charging loop, where the second interrupt circuit has an on state in which the charging loop is turned on and an off state in which the charging loop is turned off. The control unit is connected to the second interrupt circuit, where the control unit outputs, under a preset condition, a control signal to the second interrupt circuit such that the second interrupt circuit switches from the on state to the off state.

Optionally, the preset condition is that a voltage of the cell group is higher than or equal to a first preset voltage value.

Optionally, the preset condition is that a voltage of a cell is higher than or equal to a second preset voltage value.

Optionally, the battery pack further includes a voltage detection unit for detecting the voltage of the cell group or the voltage of the cell, where an input terminal of the voltage detection unit is connected to the cell group, and an output terminal of the voltage detection unit is connected to the control unit.

Optionally, the preset condition is that a charge current of the charging loop is higher than or equal to a second preset current value.

Optionally, the battery pack further includes a current detection unit for detecting the charge current of the charging loop, where an input terminal of the current detection unit is connected to the charging loop, and an output terminal of the current detection unit is connected to the control unit.

Optionally, the first interrupt circuit includes a first interrupt element; and the second interrupt circuit includes a second interrupt element different from the first interrupt element.

Optionally, the second interrupt element is a three-terminal controllable fuse.

Optionally, the first interrupt element is a strip fuse.

Optionally, a range of the second preset voltage value is greater than or equal to 4 V.

Optionally, the cell group includes multiple stacked sheet-shaped cells.

Optionally, a capacity of the battery pack is higher than or equal to 5 Ah.

The present application provides a battery pack that can meet the requirements of the high-capacity battery pack for the charge protection and the discharge protection and has a reduced cost.

### BRIEF DESCRIPTION OF DRAWINGS

FIG. 1 is a schematic view of a power tool system according to an example;
FIG. 2 is a perspective view illustrating the structure of a power tool in FIG. 1;
FIG. 3 is a perspective view illustrating the structure of a battery pack in FIG. 1;
FIG. 4 is a circuit block diagram of a battery pack according to an example;
FIG. 5 is a circuit block diagram of the battery pack shown in FIG. 4;
FIG. 6 is a circuit block diagram of a battery pack according to an example;
FIG. 7 is a circuit block diagram of a battery pack according to an example;
FIG. 8 is a circuit block diagram of the battery pack shown in FIG. 7;
FIG. 9 is a circuit block diagram of a battery pack according to an example;
FIG. 10 is a circuit block diagram of a battery pack according to an example; and
FIG. 11 is a circuit block diagram of a battery pack according to an example.

### DETAILED DESCRIPTION

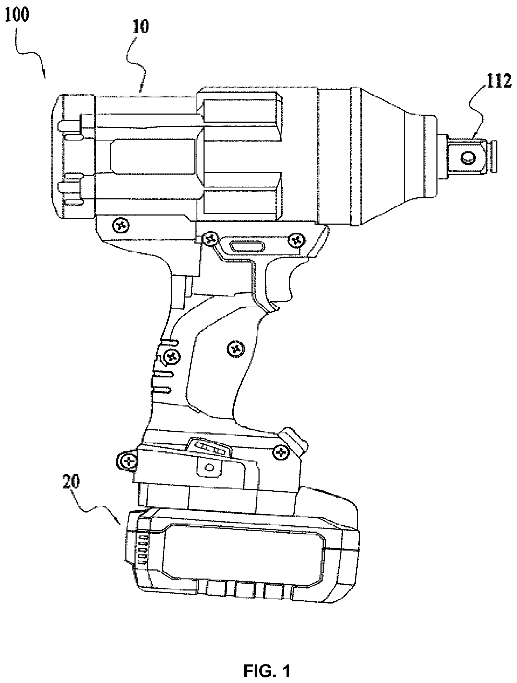

FIG. 1 illustrates a power tool system 100. The power tool system 100 includes a power tool 10 and a battery pack 20 that is adaptable to the power tool 10 so as to power the power tool 10. In FIG. 1, the power tool 10 is an impact wrench. Although this example relates to the impact wrench, it is to be understood that the present application is not limited to disclosed examples and is applicable to a power tool 10 of another type. For example, the power tool 10 is a garden tool such as a string trimmer, a hedge trimmer, a blower, or a chainsaw. The power tool 10 may also be a torque output tool such as an electric drill or an electric hammer. The power tool 10 may also be a sawing tool such as an electric circular saw, a jig saw, or a reciprocating saw. The power tool 10 may also be a grinding tool such as an angle grinder or a sander.

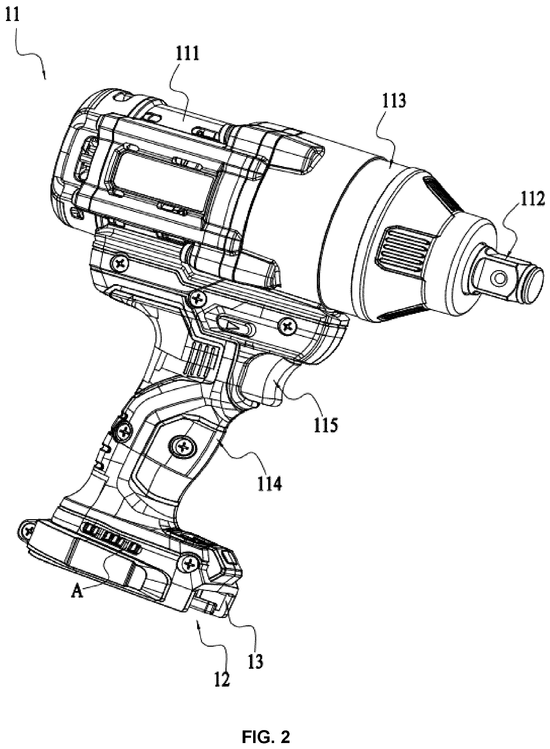

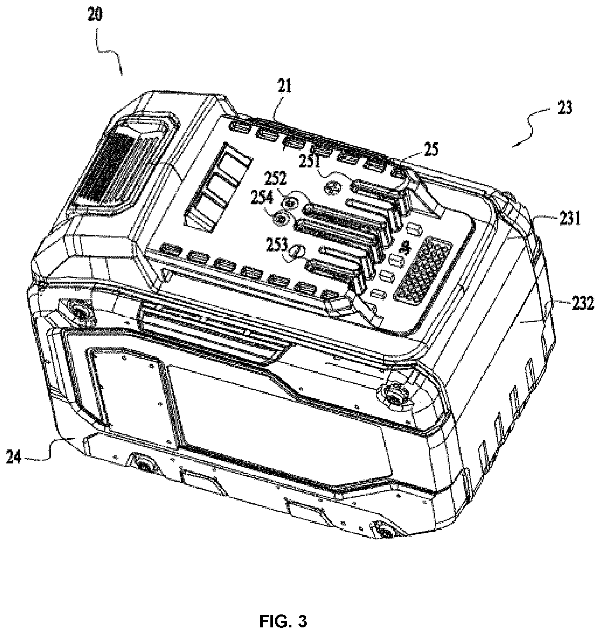

Referring to FIGS. 2 and 3, the power tool 10 includes a tool body 11 and a tool interface 12 and a tool fitting portion 13 that are disposed on the tool body 11. The battery pack 20 is provided with a battery pack interface 21 and a battery pack coupling portion 22. The battery pack interface 21 is configured to adapt to the tool interface 12 so as to power the power tool 10. The battery pack interface 21 is further adaptable to a charger 30 so as to make the charger 30 charge the battery pack 20. The battery pack coupling portion 22 can be detachably connected to the tool fitting portion 13 or the charger 30 so that the battery pack 20 can power the power tool 10 or the charger 30 can charge a cell group 24.

The tool body 11 includes an electric motor 111, an output shaft 112, and an impact mechanism 113. The output shaft 112 is driven by the electric motor 111. The impact mechanism 113 connects the electric motor 111 to the output shaft 112. The impact mechanism 113 is driven by the electric motor 111 and applies an impact force to the output shaft 112. The body of the power tool 10 further includes a handle 114 that can be held by a user to operate the power tool 10. A trigger switch 115 is further disposed on the handle. The trigger switch 115 is configured to be driven by the user of the power tool 10 to start or stop the running of the electric motor 111. Additionally, at the lower end of the handle 114, the power tool 10 is further provided with the tool interface 12 and the tool fitting portion 13 that are configured to be detachably connected to the battery pack 20. In some examples, the tool fitting portion 13 is configured to enable the battery pack 20 to be detached from the tool fitting portion 13 when the user slides the battery pack 20 toward the front of the body of the power tool 10.

Referring to FIG. 3, the battery pack 20 includes a housing 23, the cell group 24, and the battery pack interface 21. The voltage of the battery pack 20 is typically 10.8 V, 24 V, 36 V, 48 V, 56 V, or 80 V. The capacity of the battery pack 20 is higher than or equal to 5 Ah. In an example, the capacity of the battery pack is higher than or equal to 9 Ah.

The housing 23 includes an upper housing 231 and a lower housing 232. The upper housing 231 and the lower housing 232 are assembled to form an accommodating space for fixing and accommodating the cell group 24.

The cell group 24 is disposed in the accommodating space formed by the housing 23. The cell group 24 includes multiple cells, where the multiple cells are connected in series, connected in parallel, or connected in series and in parallel to constitute the cell group 24. The voltage of a single cell is 4.2 V. In some examples, the cell is cylindrical, for example, a 18650-type battery. In some other examples, the cell has a flat pouch-shaped structure, the multiple cells are stacked sequentially along an up and down direction, and the cell may also be bent into an arc, for example, a pouch-type battery pack. The cell further includes a cell housing. A steel housing is typically used as the cell housing of the cylindrical cell, and an aluminum plastic film is generally used as the cell housing of the pouch-type battery pack. The present application is not limited to the disclosed examples, and the structure of the cell is not limited herein.

In an example, the battery pack interface 21 is formed on an upper surface of the housing 23 so as to be connected to the power tool 100 or the charger 30. A battery pack terminal 25 is disposed in the battery pack interface 21 so as to output or input electrical energy.

The battery pack terminal 25 includes a second positive terminal 251, a first positive terminal 252, a negative terminal 253, and a communication terminal 254. For example, the battery pack 20 is connected, through the second positive terminal 251 and the negative terminal 253, to the charger 30 so as to charge the cell group 24, provides the electrical energy for the power tool 10 through the first positive terminal 252 and the negative terminal 253, and communicates, through the communication terminal 254, with the power tool 10 connected to the battery pack interface 21 or the charger 30 connected to the battery pack interface 21.

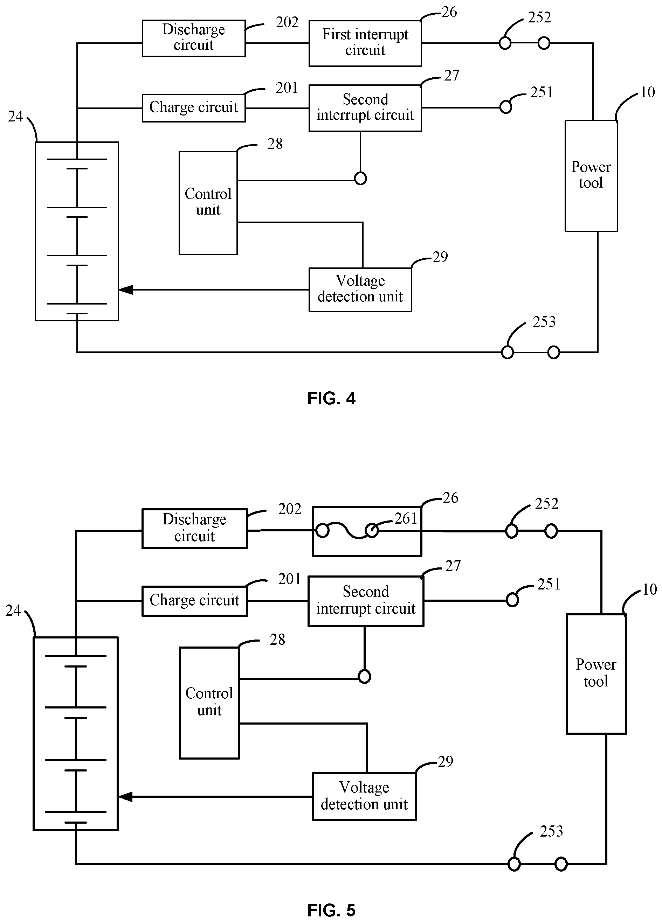

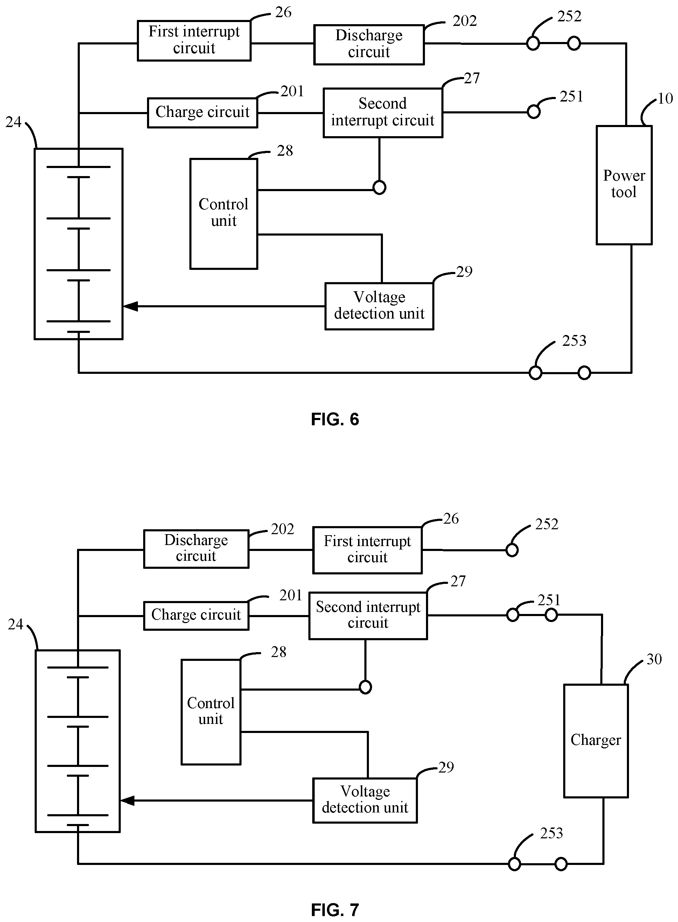

FIGS. 4 and 7 illustrate circuit block diagrams of a battery pack as one of the examples. As shown in FIGS. 4 and 7, the battery pack 20 further includes a charge circuit 201 and a discharge circuit 202. The second positive terminal 251 of the battery pack 20 serves as a positive terminal for a connection to the charger 30; and the first positive terminal 252 of the battery pack 20 serves as a positive terminal for a connection to the power tool 10. The charge circuit 201 is connected in series between the second positive terminal 251 and the negative terminal 253. Thus, when the charger 30 is connected to the battery pack 20, the second positive terminal 251, the charge circuit 201, and the negative terminal 253 form a charging loop for charging the battery pack 20. Additionally, the discharge circuit 202 is connected in series between the first positive terminal 252 and the negative terminal 253. Thus, the first positive terminal 252, the discharge circuit 202, and the negative terminal 253 form a discharging loop for powering the power tool 10. When the battery pack 20 is connected to the charger 30, the second positive terminal 251 and the negative terminal 253 receive a charge voltage from the charger 30 and supply a charge current to the battery pack 20 through the charging loop. When the battery pack 20 is connected to the power tool 10, the first positive terminal 252 and the negative terminal 253 apply a discharge voltage and supply a discharge current to the power tool 10 through the discharging loop.

Referring to FIG. 4, a first interrupt circuit 26 is further disposed on the discharging loop. In an example, the first interrupt circuit 26 is connected in series between the first positive terminal 252 and the positive electrode of the cell group 24. Optionally, the first interrupt circuit 26 is connected in series between the discharge circuit 202 and the first positive terminal 252. When the power tool 10 is connected to the battery pack 20, the positive terminal of the power tool 10 is connected to the first positive terminal 252, and the negative terminal of the power tool 10 is connected to the negative terminal 253 of the battery pack 20. When the trigger switch of the power tool 10 is turned on, the power tool 10 receives power from the battery pack 20 and supplies the power to the electric motor 111 such that the electric motor 111 starts. When the discharge current of the discharging loop of the battery pack 20 is higher than or equal to a first preset current value, the first interrupt circuit 26 can switch from an on state to an off state to turn off the discharging loop, thereby preventing the battery pack 20 and the power tool 10 from being damaged due to an excessively high discharge current and protecting the safety of the battery pack 20 and the power tool 10. The range of the first preset current value is greater than or equal to 100 A. In an example, as shown in FIG. 5, the first interrupt circuit 26 further includes a first interrupt element 261 and an accessory circuit connected to the first interrupt element 261. When the discharge current abnormally rises to the first preset current value, the first interrupt element 261 fuses itself to turn off the discharging loop. In some examples, the first interrupt element 261 is a two-terminal fuse. Optionally, the first interrupt element 261 may be a blade fuse, a wrapped fuse, or a surface mount fuse. The shape of a fuse is not limited herein.

In some other examples, referring to FIG. 6, the example shown in FIG. 6 differs from the example shown in FIG. 4 in that the first interrupt circuit 26 may be connected in series between the discharge circuit 202 and the positive electrode of the cell group 24.

Referring to FIG. 7, a second interrupt circuit 27 is further disposed on the charging loop. The second interrupt circuit 27 has an on state in which the charging loop is turned on and an off state in which the charging loop is turned off. The second interrupt circuit 27 can switch from the on state to the off state under a preset condition to turn off the charging loop such that the charger 30 stops charging the cell group 24 to improve the safety of the battery pack 20.

In some examples, the battery pack 20 further includes a control unit 28 and a voltage detection unit 29. The control unit 28 can output a control signal to the second interrupt circuit 27 under the preset condition such that the second interrupt circuit 27 switches from the on state to the off state. In some examples, the control unit 28 includes a microcomputer having a central processing unit (CPU), a read-only memory (ROM), and a random-access memory (RAM). The control unit 28 may further include a flash ROM as a non-volatile memory. A current detection unit 204 is configured to detect the charge current passing through the charging loop. The input terminal of the voltage detection unit 29 is connected to the cell group, and the output terminal of the voltage detection unit 29 is connected to the control unit 28 and inputs a detected result into the control unit 28. In some other examples, the input terminal of the voltage detection unit 29 is connected to the cell and used for detecting the voltage of the cell.

In an example, the second interrupt circuit 27 is connected in series between the second positive terminal 251 and the positive electrode of the cell group 24. In some examples, the second interrupt circuit 27 is connected in series between the charge circuit 201 and the second positive terminal 251. When the charger 30 is connected to the battery pack 20, the positive terminal of the charger 30 is connected to the second positive terminal 251, and the negative terminal of the charger 30 is connected to the negative terminal 253 of the battery pack 20. The voltage detection unit 29 detects the voltage of the cell group in real time. When the voltage detection unit 29 detects that the voltage of the cell group is higher than or equal to a first preset voltage value, the control unit 28 sends the control signal to the second interrupt circuit 27 to control the second interrupt circuit 27 to switch from the on state to the off state so as to turn off the charging loop such that the charger 30 stops charging the battery pack 20. In some other examples, the voltage detection unit 29 detects the voltage of the cell in real time. When the voltage detection unit 29 detects that the voltage of the cell is higher than or equal to a second preset voltage value, the control unit 28 sends the control signal to the second interrupt circuit 27 to control the second interrupt circuit 27 to switch from the on state to the off state so as to turn off the charging loop such that the charger 30 stops charging the battery pack 20. The range of the second preset voltage value is greater than or equal to 4 V.

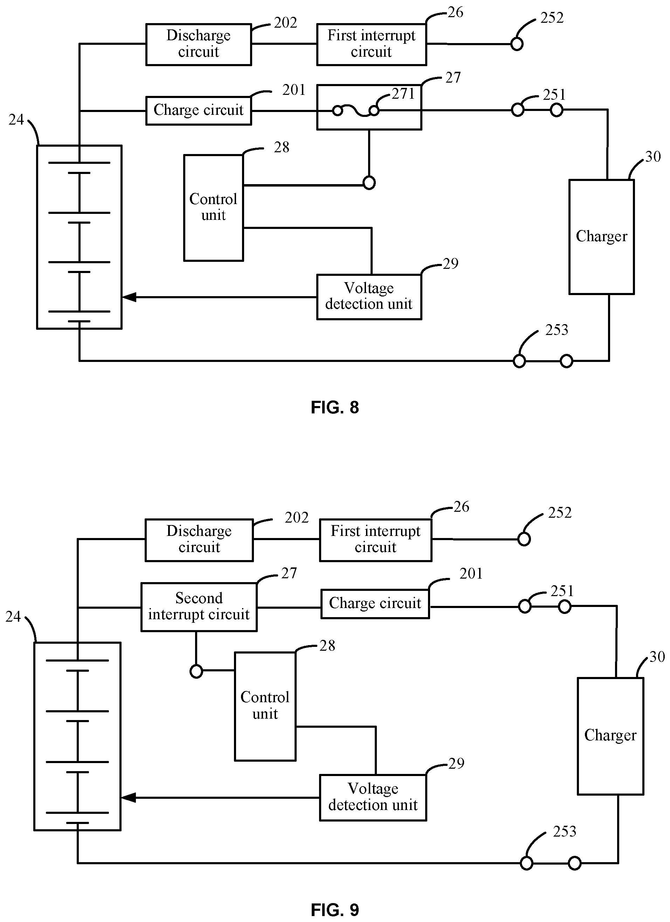

As shown in FIG. 8, the second interrupt circuit 27 further includes a second interrupt element 271 and an accessory circuit connected to the second interrupt element 271. In some examples, the second interrupt element 271 is different from the first interrupt element 261. The second interrupt element 271 is a three-terminal controllable fuse that includes a fusing portion and a heating portion. The energized heating portion can generate heat and fuse the fusing portion. For example, the heating portion may be a heating resistor. In the second interrupt circuit 27, the heating portion is electrically connected to the control unit 28. When the control unit 28 outputs the control signal to the heating portion, the heating portion generates heat to fuse the fusing portion. When the fusing portion is fused, the charging loop of the battery pack 20 is turned off. Since the fusing portion is no longer conductive, the battery pack 20 cannot be used.

In some other examples, referring to FIG. 9, the example shown in FIG. 9 differs from the example shown in FIG. 7 in that the second interrupt circuit 27 is connected in series between the positive electrode of the cell group 24 and the charge circuit 201.

In this manner, the battery pack 20 is provided with the second positive terminal 251 connected to the positive terminal of the charger 30 and the first positive terminal 252 connected to the positive terminal of the power tool 10. Accordingly, different elements may be selected according to the charge characteristic and the discharge characteristic of the battery pack 20 as the first interrupt element 261 on the charging loop and the second interrupt element 271 on the discharging loop, so as to meet different requirements of the high-capacity battery pack 20 for charge protection and discharge protection at the same time and reduce the cost of the battery pack 20.

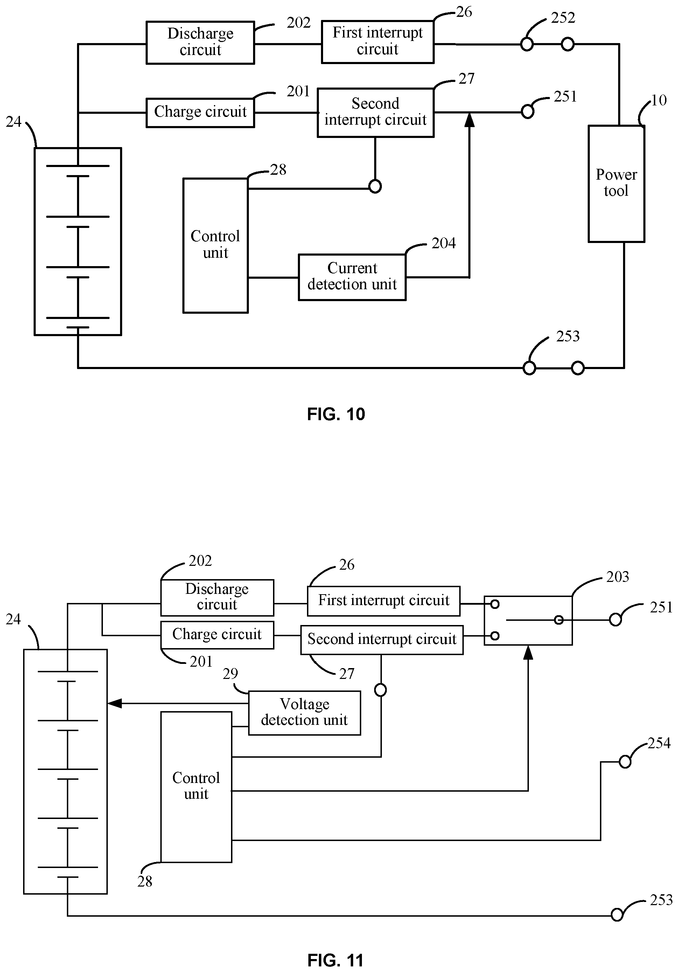

Referring to FIG. 10, the example shown in FIG. 10 differs from the example shown in FIG. 7 in that the battery pack further includes the current detection unit 204. The input terminal of the current detection unit 204 is connected to the charging loop, and the output terminal of the current detection unit 204 is connected to the control unit 28 and inputs a detected result into the control unit 28. In some examples, the current detection unit 204 includes a current sensing resistor and a differential amplifier circuit.

The second interrupt circuit 27 is connected in series between the second positive terminal 251 and the positive electrode of the cell group 24. In some examples, the second interrupt circuit 27 is connected in series between the charge circuit 201 and the second positive terminal 251. When the charger 30 is connected to the battery pack 20, the positive terminal of the charger 30 is connected to the second positive terminal 251, and the negative terminal of the charger 30 is connected to the negative terminal 253 of the battery pack 20. The current detection unit 204 detects the charge current of the charging loop in real time. When the current detection unit 204 detects that the charge current is higher than or equal to a second preset current value, the control unit 28 sends the control signal to the second interrupt circuit 27 to control the second interrupt circuit 27 to switch from the on state to the off state so as to turn off the charging loop such that the charger 30 stops charging the battery pack 20. In an example, the second interrupt circuit 27 further includes the second interrupt element 271 and the accessory circuit connected to the second interrupt element 271. In some examples, the second interrupt element 271 is different from the first interrupt element 261. The second interrupt element 271 is the three-terminal controllable fuse that includes the fusing portion and the heating portion. The energized heating portion can generate heat and fuse the fusing portion. For example, the heating portion may be the heating resistor. In the second interrupt circuit 27, the heating portion is electrically connected to the control unit 28. When the control unit 28 outputs the control signal to the heating portion, the heating portion generates heat to fuse the fusing portion. When the fusing portion is fused, the charging loop of the battery pack 20 is turned off. Since the fusing portion is no longer conductive, the battery pack 20 cannot be used.

In another example, as shown in FIG. 11, the battery pack terminal 25 includes a positive terminal 251, a negative terminal 253, and a communication terminal 254. The positive terminal of the battery pack 20 is used for a connection to the positive electrode of the power tool 10 or the positive electrode of the charger 30, and the negative terminal 253 of the battery pack 20 is used for a connection to the negative electrode of the power tool 10 or the negative electrode of the charger 30. The battery pack 20 communicates with the power tool 10 or the charger 30 through the communication terminal 254. The communication terminal 254 is connected to the control unit 28. When the battery pack 20 is connected to the charger 30 or the power tool 10, the control unit 28 communicates with the communication terminal 254 to determine whether an external connection device connected to the battery pack interface 21 is the charger 30 or the power tool 10.

The battery pack 20 further includes a connection unit 203. The input terminal of the connection unit 203 is connected to the positive terminal 251, and the output terminal of the connection unit 203 is selectively connected to the second interrupt circuit 27 or the first interrupt circuit 26. When the battery pack 20 is connected to the power tool 10, the control unit 28 controls the connection unit to be connected to the first interrupt circuit 26 so that the positive terminal 251, the connection unit 203, the first interrupt circuit 26, the discharge circuit 202, and the negative terminal 253 form a discharging loop for powering the power tool 10. When the battery pack 20 is connected to the charger 30, the control unit 28 controls the connection unit to be connected to the second interrupt circuit 27 so that the positive terminal 251, the connection unit 203, the second interrupt circuit 27, the charge circuit 201, and the negative terminal 253 form a charging loop for charging the cell group 24.

When the power tool 10 is connected to the battery pack 20, the control unit 28 controls the connection unit 203 to be connected to the first interrupt circuit 26. When the trigger switch of the power tool 10 is turned on, the power tool 10 receives power from the battery pack 20 and supplies the power to the electric motor 111 such that the electric motor 111 starts. If the discharge current of the discharging loop of the battery pack 20 is higher than or equal to the first preset current value, the first interrupt circuit 26 can switch from the on state to the off state to turn off the discharging loop, thereby protecting the safety of the battery pack 20 and the power tool 10. The range of the first preset current value is greater than or equal to 100 A. In an example, the first interrupt circuit 26 further includes the first interrupt element and the accessory circuit connected to the first interrupt element. When the discharge current abnormally rises to the first preset current value, the first interrupt element fuses itself to turn off the discharging loop. In some examples, the first interrupt element is the two-terminal fuse. For example, the first interrupt element may be the blade fuse, the wrapped fuse, or the surface mount fuse. The shape of the fuse is not limited herein.

When the charger 30 is connected to the battery pack 20, the control unit 28 controls the connection unit 203 to be connected to the second interrupt circuit 27. If the voltage detection unit 29 detects that the voltage of the cell group is higher than or equal to the first preset voltage value, the control unit 28 sends the control signal to the second interrupt circuit 27 to control the second interrupt circuit 27 to switch from the on state to the off state so as to turn off the charging loop. In some other examples, the voltage detection unit 29 detects the voltage of the cell. If the voltage detection unit 29 detects that the voltage of the cell is higher than or equal to the second preset voltage value, the control unit 28 sends the control signal to the second interrupt circuit 27 to control the second interrupt circuit 27 to switch from the on state to the off state so as to turn off the charging loop. The range of the second preset voltage value is greater than or equal to 4 V.

In some examples, the second interrupt circuit 27 further includes the second interrupt element and the accessory circuit connected to the second interrupt element. In some examples, the second interrupt element is different from the first interrupt element. The second interrupt element is the three-terminal controllable fuse that includes the fusing portion and the heating portion. The energized heating portion can generate heat and fuse the fusing portion. For example, the heating portion may be the heating resistor. In the second interrupt circuit 27, the heating portion is electrically connected to the control unit 28. When the control unit 28 outputs the control signal to the heating portion, the heating portion generates heat to fuse the fusing portion. When the fusing portion is fused, the charging loop of the battery pack 20 is turned off. Since the fusing portion is no longer conductive, the battery pack 20 cannot be used.

In this manner, different interrupt elements are selected according to the charge characteristic and the discharge characteristic of the battery pack 20 and disposed on the charging loop and the discharging loop, separately, thereby meeting the different requirements of the high-capacity battery pack 20 for the charge protection and the discharge protection and reducing the cost of the battery pack 20.

## Claims

1. A battery pack (20), comprising:
a housing (23);
a cell group (24) disposed in the housing, wherein the cell group comprises a plurality of cells;
an interface (21) disposed on the housing so as to be connected to a charger or a power tool (10);
wherein the interface comprises:
a first positive terminal (252) electrically connected to a positive first electrode of the cell group;
a second positive terminal (251) electrically connected to the positive first electrode of the cell group; and
a negative third terminal (253) electrically connected to a negative second electrode of the cell group;
a first interrupt circuit (26) disposed on a discharging loop, wherein the first interrupt circuit is broken to turn off the discharging loop when a discharge current of the discharging loop is higher than or equal to a first preset current value;
**characterized in that**
the interface further comprises:
a second interrupt circuit (27) disposed on a charging loop, wherein the second interrupt circuit has an on state in which the charging loop is turned on and an off state in which the charging loop is turned off; and
a control unit (28) connected to the second interrupt circuit, wherein the control unit outputs, under a preset condition, a control signal to the second interrupt circuit such that the second interrupt circuit switches from the on state to the off state.

2. The battery pack according to claim 1, wherein the preset condition is that a voltage of the cell group is higher than or equal to a first preset voltage value.

3. The battery pack according to claim 1, wherein the preset condition is that a voltage of a cell among the plurality of cells is higher than or equal to a second preset voltage value.

4. The battery pack according to claim 2 or 3, wherein the battery pack further comprises:
a voltage detection unit (29) for detecting the voltage of the cell group or the voltage of the cell;
wherein an input terminal of the voltage detection unit is connected to the cell group or the cell, and an output terminal of the voltage detection unit is connected to the control unit.

5. The battery pack according to claim 1, wherein the preset condition is that a charge current of the charging loop is higher than or equal to a second preset current value.

6. The battery pack according to claim 5, wherein the battery pack further comprises:
a current detection unit (204) for detecting the charge current of the charging loop;
wherein an input terminal of the current detection unit is connected to the charging loop, and an output terminal of the current detection unit is connected to the control unit.

7. The battery pack according to claim 1, wherein the first interrupt circuit comprises a first interrupt element (261); and the second interrupt circuit comprises a second interrupt element (271) different from the first interrupt element.

8. The battery pack according to claim 7, wherein the second interrupt element is a three-terminal controllable fuse.

9. The battery pack according to claim 7, wherein the first interrupt element is a two-terminal fuse.

10. The battery pack according to claim 3, wherein a range of the second preset voltage value is greater than or equal to 4 V.

11. The battery pack according to claim 1, wherein the cell group comprises a plurality of stacked sheet-shaped cells.

12. The battery pack according to claim 1, wherein a capacity of the battery pack is higher than or equal to 5 Ah.

13. The battery pack according to claim 1, wherein the battery pack further comprises:
a discharge circuit (202) disposed between the first terminal and the third terminal; and
a charge circuit (201) disposed between the second terminal and the third terminal.

14. The battery pack according to claim 1, wherein the discharging loop comprises the first terminal and the third terminal, and the charging loop comprises the second terminal and the third terminal.

## Patentansprüche

1. Akkupack (20), umfassend:
ein Gehäuse (23);
eine in dem Gehäuse angeordnete Zellengruppe (24), wobei die Zellengruppe mehrere Zellen umfasst;
eine an dem Gehäuse angeordnete Schnittstelle (21) zur Verbindung mit einem Ladegerät oder einem Elektrowerkzeug (10);
wobei die Schnittstelle Folgendes umfasst:
einen ersten positiven Anschluss (252), der elektrisch mit einer positiven ersten Elektrode der Zellengruppe verbunden ist;
einen zweiten positiven Anschluss (251), der elektrisch mit der positiven ersten Elektrode der Zellengruppe verbunden ist; und
einen negativen dritten Anschluss (253), der elektrisch mit einer negativen zweiten Elektrode der Zellengruppe verbunden ist;
eine erste Unterbrechungsschaltung (26), die in einem Entladestromkreis angeordnet ist, wobei die erste Unterbrechungsschaltung unterbrochen wird, um den Entladestromkreis abzuschalten, wenn ein Entladestrom des Entladestromkreises größer als oder gleich einem ersten voreingestellten Stromwert ist;
**dadurch gekennzeichnet, dass**
die Schnittstelle ferner Folgendes umfasst:
eine zweite Unterbrechungsschaltung (27), die in einem Ladestromkreis angeordnet ist, wobei die zweite Unterbrechungsschaltung einen Einschaltzustand, in dem der Ladestromkreis eingeschaltet ist, und einen Ausschaltzustand, in dem der Ladestromkreis ausgeschaltet ist, aufweist; und
eine mit der zweiten Unterbrechungsschaltung verbundene Steuereinheit (28), wobei die Steuereinheit unter einer voreingestellten Bedingung ein Steuersignal an die zweite Unterbrechungsschaltung ausgibt, sodass die zweite Unterbrechungsschaltung von dem Einschaltzustand in den Ausschaltzustand wechselt.

2. Akkupack nach Anspruch 1, wobei die voreingestellte Bedingung darin besteht, dass eine Spannung der Zellengruppe größer als oder gleich einem ersten voreingestellten Spannungswert ist.

3. Akkupack nach Anspruch 1, wobei die voreingestellte Bedingung darin besteht, dass eine Spannung einer Zelle aus den mehreren Zellen größer als oder gleich einem zweiten voreingestellten Spannungswert ist.

4. Akkupack nach Anspruch 2 oder 3, wobei der Akkupack ferner Folgendes umfasst:
eine Spannungserfassungseinheit (29) zum Erfassen der Spannung der Zellengruppe oder der Spannung der Zelle;
wobei ein Eingangsanschluss der Spannungserfassungseinheit mit der Zellengruppe oder der Zelle verbunden ist und ein Ausgangsanschluss der Spannungserfassungseinheit mit der Steuereinheit verbunden ist.

5. Akkupack nach Anspruch 1, wobei die voreingestellte Bedingung darin besteht, dass ein Ladestrom des Ladestromkreises größer als oder gleich einem zweiten voreingestellten Stromwert ist.

6. Akkupack nach Anspruch 5, wobei der Akkupack ferner Folgendes umfasst:
eine Stromerfassungseinheit (204) zum Erfassen des Ladestroms des Ladestromkreises;
wobei ein Eingangsanschluss der Stromerfassungseinheit mit dem Ladestromkreis verbunden ist und ein Ausgangsanschluss der Stromerfassungseinheit mit der Steuereinheit verbunden ist.

7. Akkupack nach Anspruch 1, wobei die erste Unterbrechungsschaltung ein erstes Unterbrechungselement (261) umfasst; und die zweite Unterbrechungsschaltung ein zweites Unterbrechungselement (271) umfasst, das vom ersten verschieden ist.

8. Akkupack nach Anspruch 7, wobei das zweite Unterbrechungselement eine steuerbare Sicherung mit drei Anschlüssen ist.

9. Akkupack nach Anspruch 7, wobei das erste Unterbrechungselement eine Sicherung mit zwei Anschlüssen ist.

10. Akkupack nach Anspruch 3, wobei ein Bereich des zweiten voreingestellten Spannungswerts größer als oder gleich 4 V ist.

11. Akkupack nach Anspruch 1, wobei die Zellengruppe mehrere gestapelte blattförmige Zellen umfasst.

12. Akkupack nach Anspruch 1, wobei eine Kapazität des Akkupacks größer als oder gleich 5 Ah ist.

13. Akkupack nach Anspruch 1, wobei der Akkupack ferner Folgendes umfasst:
eine Entladeschaltung (202), die zwischen dem ersten Anschluss und dem dritten Anschluss angeordnet ist; und
eine Ladeschaltung (201), die zwischen dem zweiten Anschluss und dem dritten Anschluss angeordnet ist.

14. Akkupack nach Anspruch 1, wobei der Entladestromkreis den ersten Anschluss und den dritten Anschluss umfasst und der Ladestromkreis den zweiten Anschluss und den dritten Anschluss umfasst.

## Revendications

1. Bloc-batterie (20), comprenant :
un boîtier (23) ;
un groupe de cellules (24) disposé dans le boîtier, dans lequel le groupe de cellules comprend une pluralité de cellules ;
une interface (21) disposée sur le boîtier de manière à être reliée à un chargeur ou à un outil électrique (10) ;
dans lequel l'interface comprend :
une première borne positive (252) reliée électriquement à une première électrode positive du groupe de cellules ;
une deuxième borne positive (251) reliée électriquement à la première électrode positive du groupe de cellules ; et
une troisième borne négative (253) reliée électriquement à une deuxième électrode négative du groupe de cellules ;
un premier circuit d'interruption (26) disposé sur une boucle de décharge, dans lequel le premier circuit d'interruption est ouvert pour désactiver la boucle de décharge lorsqu'un courant de décharge de la boucle de décharge est supérieur ou égal à une première valeur de courant prédéfinie ;
**caractérisé en ce que**
l'interface comprend en outre :
un deuxième circuit d'interruption (27) disposé sur une boucle de charge, dans lequel le deuxième circuit d'interruption présente un état activé dans lequel la boucle de charge est activée et un état désactivé dans lequel la boucle de charge est désactivée ; et
une unité de commande (28) reliée au deuxième circuit d'interruption, dans lequel l'unité de commande délivre, dans une condition prédéfinie, un signal de commande au deuxième circuit d'interruption de sorte que le deuxième circuit d'interruption passe de l'état activé à l'état désactivé.

2. Bloc-batterie selon la revendication 1, dans lequel la condition prédéfinie est qu'une tension du groupe de cellules est supérieure ou égale à une première valeur de tension prédéfinie.

3. Bloc-batterie selon la revendication 1, dans lequel la condition prédéfinie est qu'une tension d'une cellule parmi la pluralité de cellules est supérieure ou égale à une deuxième valeur de tension prédéfinie.

4. Bloc-batterie selon la revendication 2 ou 3, dans lequel le bloc-batterie comprend en outre :
une unité de détection de tension (29) destinée à détecter la tension du groupe de cellules ou la tension de la cellule ;
dans lequel une borne d'entrée de l'unité de détection de tension est reliée au groupe de cellules ou à la cellule, et une borne de sortie de l'unité de détection de tension est reliée à l'unité de commande.

5. Bloc-batterie selon la revendication 1, dans lequel la condition prédéfinie est qu'un courant de charge de la boucle de charge est supérieur ou égal à une deuxième valeur de courant prédéfinie.

6. Bloc-batterie selon la revendication 5, dans lequel le bloc-batterie comprend en outre :
une unité de détection de courant (204) destinée à détecter le courant de charge de la boucle de charge ;
dans lequel une borne d'entrée de l'unité de détection de courant est reliée à la boucle de charge, et une borne de sortie de l'unité de détection de courant est reliée à l'unité de commande.

7. Bloc-batterie selon la revendication 1, dans lequel le premier circuit d'interruption comprend un premier élément d'interruption (261) ; et le deuxième circuit d'interruption comprend un deuxième élément d'interruption (271) différent du premier élément d'interruption.

8. Bloc-batterie selon la revendication 7, dans lequel le deuxième élément d'interruption est un fusible commandable à trois bornes.

9. Bloc-batterie selon la revendication 7, dans lequel le premier élément d'interruption est un fusible à deux bornes.

10. Bloc-batterie selon la revendication 3, dans lequel une plage de la deuxième valeur de tension prédéfinie est supérieure ou égale à 4 V.

11. Bloc-batterie selon la revendication 1, dans lequel le groupe de cellules comprend une pluralité de cellules empilées en forme de feuille.

12. Bloc-batterie selon la revendication 1, dans lequel une capacité du bloc-batterie est supérieure ou égale à 5 Ah.

13. Bloc-batterie selon la revendication 1, dans lequel le bloc-batterie comprend en outre :
un circuit de décharge (202) disposé entre la première borne et la troisième borne ; et
un circuit de charge (201) disposé entre la deuxième borne et la troisième borne.

14. Bloc-batterie selon la revendication 1, dans lequel la boucle de décharge comprend la première borne et la troisième borne, et la boucle de charge comprend la deuxième borne et la troisième borne.
